# EUROPEAN PATENT SPECIFICATION

(11) **EP 2 371 772 B1**
(45) Date of publication and mention of the grant of the patent: **14.09.2016**
(21) Application number: 11002703.4
(22) Date of filing: 31.03.2011
(51) Int. Cl.: C03B 19/14

(54) **Method for production of synthetic quartz glass**
Verfahren zur Herstellung von synthetischem Quarzglas
Procédé pour produire du verre quartzeux synthétique

(30) Priority: 01.04.2010 JP 2010085347
(43) Date of publication of application: 05.10.2011
(73) Proprietor: Asahi Glass Company, Limited, Chiyoda-ku Tokyo 100-8405 (JP)
(72) Inventor: Tamitsuji, Chikaya, Chiyoda-Ku Tokyo 100-8405 (JP); Watanabe, Kunio, Chiyoda-Ku Tokyo 100-8405 (JP); Koike, Akio, Chiyoda-Ku Tokyo 100-8405 (JP)
(74) Representative: Müller-Boré & Partner Patentanwälte PartG mbB

(56) References cited:
- EP-A1- 2 351 712
- WO-A1-2009/107869
- US-A1- 2003 195 107
- US-B2- 6 915 664

## Description

The present invention relates to a method for production of synthetic quartz glass.

Photolithography is widely used to transcribe a fine circuit pattern onto a wafer and thereby fabricate an integrated-circuit.

A substrate for optical members for photolithography is required to be made of a material having a high UV transmittance and durability. For example, fluorine-containing synthetic quartz glass is suggested as such a material (Patent Document 1).

Further, in accordance with the recent trends toward high integration and high functionalization of integerated circuits, microsizing of the integrated circuits and shortening of the wavelength of an exposure light source are being advanced. For this reason, lithography using EUV light (representatively, light with a wavelength of 13 nm) is attracting attention.

Extreme ultra violet (EUV) light refers to light of the wavelength band of a soft X-ray region or vacuum ultraviolet region, specifically, light having wavelength of about 0.2 to about 100 nm. All optical members of exposure devices for EUV lithography are reflective optical systems, since there is no a material capable of transmitting light of EUV light energy region therethrough.

A substrate of optical members for EUV lithography (such as photomask or mirror) is required to be made of a material having a low coefficient of thermal expansion so as to prevent distortion at the time of irradiation with EUV light. For example, TiO₂-containing synthetic quartz glass containing fluorine of 100 ppm by mass or more is suggested as such a material (Patent Document 2).

A method including the following steps (a) to (c) is suggested as a method of introducing fluorine into synthetic quartz glass (Patent Document 1, 2):
(a) depositing and growing quartz glass fine particles obtained by flame hydrolysis of a glass-forming material onto a substrate, to thereby form a porous glass body;
(b) maintaining the porous glass body under an atmosphere containing a fluorine compound, to thereby obtain a fluorine-containing porous glass body; and
(c) heating the fluorine-containing porous glass body to a transparent vitrification temperature, to thereby obtain a fluorine-containing transparent glass body.

Patent Document 3 discloses a process for producing a synthetic quartz glass to be used by irradiation with light within a range of from the ultraviolet region to the vacuum ultraviolet region.

[Patent Document 1] JP-A-2003-183034
[Patent Document 2] JP-A-2005-104820
[Patent Document 3] US 2003/0195107 A1

Patent Documents 1 and 2 disclose such as SiF₄, SF₆, CHF₃, CF₄, F₂ as fluorine compounds used in step (b). Of these fluorine compounds, SiF₄ is used in Examples of Patent Documents 1 and 2. However, the introduction of 1,000 ppm by mass or more of fluorine in the porous glass body using SiF₄ requires a high temperature higher than 400°C, thus causing the following problems:
(i) O-ring is required to be cooled with water in order to secure gas tightness of a reaction vessel, thus making the reaction vessel complicated;
(ii) The use of an electric furnace as the reaction vessel is required, but, in the case where the porous glass body has a large size, it is difficult to prepare an electric furnace suitable for the glass size; and
(iii) Such as variation in temperature and turbulence of gasflow cause variation in the amount of the introduced fluorine among the porous glass body. When the glass body is used as an optical member for EUV lithography, the variation in the fluorine concentration among the glass body causes variation in coefficient of thermal expansion among the glass body, resulting in deterioration of resolution upon exposure.

Meanwhile, the inventors of the present invention confirmed that 3,000 ppm by mass or more of fluorine can be introduced into the porous glass body at a low temperature of 400°C or lower using high-reactive elemental fluorine (F₂) among the above-mentioned fluorine compounds.

However, it has been proved that, in the case where elemental fluorine (F₂) is used in step (b), during the transparent vitrification of the subsequent step (c), fluorine is eliminated from the glass body and the fluorine concentration of the resulting transparent glass body is thus considerably deteriorated.

The present invention provides a method for production of synthetic quartz glass in which the introduction of fluorine into a porous glass body can be carried out at a low temperature of 400°C or lower and fluorine concentration in the finally-obtained synthetic quartz glass can be achieved steadily to be 3,000 ppm by mass or higher.

The method of the present invention is a method for production of a synthetic quartz glass having a fluorine concentration of 3,000 ppm by mass or higher, comprising the following steps (a) to (c):
(a) depositing and growing quartz glass fine particles obtained by flame hydrolysis of a glass-forming material onto a substrate, to thereby form a porous glass body;
(b) maintaining the porous glass body in a reaction vessel under an elemental fluorine (F₂)-containing atmosphere of a pressure of P_{b1} and a temperature of 400°C or lower, and followed by maintaining in the reaction vessel under condition of a pressure P_{b2} lower than the pressure P_{b1} and a temperature of 400°C or lower, to thereby obtain a fluorine-containing porous glass body; and
(c) heating the fluorine-containing porous glass body in a vitrification furnace to a transparent vitrification temperature, to thereby obtain a fluorine-containing transparent glass body;
wherein the pressure P_{b2} in step (b) is lower than the atmospheric pressure; and wherein a temperature T_{b2} at which the glass body is maintained under the condition of the pressure P_{b2} in step (b) is equal to or higher than a temperature T_{b1} at which the glass body is maintained under the condition of the pressure P_{b1}.

Further, the method of the present invention is a method for production of a TiO₂-containing synthetic quartz glass (TiO₂-SiO₂ glass) having a fluorine concentration of 3,000 ppm by mass or higher, comprising the following steps (a) to (c):
(a) depositing and growing TiO₂-SiO₂ glass fine particles obtained by flame hydrolysis of a glass-forming material onto a substrate, to therby form a porous TiO₂-SiO₂ glass body;
(b) maintaining the porous TiO₂-SiO₂ glass body in a reaction vessel under an elemental fluorine (F₂)-containing atmosphere of a pressure of P_{b1} and a temperature of 400°C or lower, and followed by maintaining in the reaction vessel under condition of a pressure P_{b2} lower than the pressure P_{b1} and a temperature of 400°C or lower, to thereby obtain a fluorine-containing porous TiO₂-SiO₂ glass body; and
(c) heating the fluorine-containing porous TiO₂-SiO₂ glass body in a vitrification furnace to a transparent vitrification temperature, to thereby obtain a fluorine-containing transparent TiO₂-SiO₂ glass body;
wherein the pressure P_{b2} in step (b) is lower than the atmospheric pressure; and wherein a temperature T_{b2} at which the glass body is maintained under the condition of the pressure P_{b2} in step (b) is equal to or higher than a temperature T_{b1} at which the glass body is maintained under the condition of the pressure P_{b1}.

In the above step (b), it is preferred that a period t_{b2} during which the glass body is maintained under the condition of the pressure P_{b2} is from 30 minutes to 1 day.

In the above step (b), it is preferred that a solid metal fluoride is allowed to be present in the reaction vessel.

In the above step (b), it is preferred that elemental fluorine (F₂) is continuously or intermittently supplied to the reaction vessel and a gas in the reaction vessel is continuously or intermittently discharged from the reaction vessel.

It is preferred that the fluorine-containing porous glass body comes into contact with the atmosphere when the fluorine-containing porous glass body moves from the reaction vessel to the vitrification furnace.

In accordance with the method for production of synthetic quartz glass of the present invention, the introduction of fluorine into the porous glass body can be carried out at a low temperature of 400°C or lower and fluorine concentration in the finally-obtained synthetic quartz glass can be achieved steadily to be 3,000 ppm by mass or higher. In addition, the above-mentioned problems (i) to (iii) can be solved by introducing fluorine into the porous glass body at a low temperature of 400°C or lower. In particular, owing to solving the problem (iii), there can be produced a synthetic quartz glass having a fluorine concentration of 3,000 ppm by mass or higher, having an extremely small variation in fluorine concentration, and thus being suitable for optical members of exposure devices for EUV lithography.

Hereinafter, in the present specification, "ppm" means "ppm by mass" and "%" means "% by mass", unless specifically mentioned otherwise.

Further, a "TiO₂-containing synthetic quartz glass" is referred to as a "TiO₂-SiO₂ glass".

Further, in some cases, a "synthetic quartz glass containing no TriO₂" and "TiO₂-SiO₂ glass" may be broadly referred to as a "synthetic quartz glass".

Further, in some cases, "quartz glass fine particles containing no TiO₂" and "TiO₂-SiO₂ glass fine particles" may be broadly referred to as "quartz glass fine particles".

Further, in some cases, a "porous glass body containing no TiO₂" and "porous TiO₂-SiO₂ glass body" may be broadly referred to as a "porous glass body".

Further, in some cases, a "transparent glass body containing no TiO₂" and "transparent TiO₂-SiO₂ glass body" may be broadly referred to as a "transparent glass body".

Further, in some cases, a "formed glass body containing no TiO₂" and "formed TiO₂-SiO₂ glass body" may be broadly referred to as a "formed glass body".

### <Method for Production of Synthetic Quartz Glass>

The method for production of synthetic quartz glass according to the present invention includes the following steps (a) to (e):
(a) depositing and growing quartz glass fine particles obtained by flame hydrolysis of a glass-forming material onto a substrate, to thereby form a porous glass body;
(b) maintaining the porous glass body in a reaction vessel under an elemental fluorine (F₂)-containing atmosphere of a pressure of P_{b1} and a temperature of 400°C or lower, and followed by maintaining in the reaction vessel under condition of a pressure P_{b2} lower than the pressure P_{b1} and a temperature of 400°C or lower, to thereby obtain a fluorine-containing porous glass body, wherein the pressure P_{b2} is lower than the atmospheric pressure, and wherein a temperature T_{b2} at which the glass body is maintained under the condition of the pressure P_{b2} is equal to or higher than a temperature T_{b1} at which the glass body is maintained under the condition of the pressure P_{b1};
(c) heating the fluorine-containing porous glass body in a vitrification furnace to a transparent vitrification temperature, to thereby obtain a fluorine-containing transparent glass body;
(d) if necessary, heating the fluorine-containing transparent glass body obtained in step (c) to a softening temperature or higher and molding the transparent glass body to a desired shape, to thereby obtain a fluorine-containing formed glass body; and
(e) if necessary, annealing the fluorine-containing transparent glass body obtained in step (c), or fluorine-containing formed glass body obtained in step (d).

### (Step (a))

Quartz glass fine particles (soot) obtained by flame hydrolysis of an SiFO₂ precursor, or an SiFO₂ precursor and a TiO₂ precursor, as a glass-forming material, to by a soot method are deposited and grown onto a substrate to form a porous glass body.

The SiFO₂ precursor is not particularly limited so long as it is capable of being gasified. The SiFO₂ precursor includes such as silicon halide compounds and alkoxysilanes.

The silicon halide compounds include, e.g., chlorides such as SiCl₄, SiHCl₃, SiH₂Cl₂ and SiH₃Cl; fluorides such as SiF₄, SiHF₃ and SiH₂F₂; bromides such as SiBr₄ and SiHBr₃; and iodides such as SiI₄

The alkoxysilanes include compounds represented by the following formula:

RₙSi(OR)₄₋ₙ

wherein R is an alkyl group having 1 to 4 carbon atoms, R's may be the same or different, and n is an integer of 0 to 3.

The TiO₂ precursor is not particularly limited so long as it is capable of being gasified. The TiO₂ precursor includes such as titanium halide compounds and alkoxytitaniums.

The titanium halide compounds include, e.g., chlorides such as TiCl₄, TiHCl₃, TiH₂Cl₂ and TiH₃Cl; fluorides such as TiF₄, TiHF₃ and TiH₂F₂; bromides such as TiBr₄ and TiHBr₃; and iodides such as TiI₄

The alkoxytitaniums include compounds represented by the following formula:

RₙTi(OR)₄₋ₙ

wherein R is an alkyl group having 1 to 4 carbon atoms, R's may be the same or different, and n is an integer of 0 to 3.

Furthermore, compounds containing Si and Ti such as silicon titanium double alkoxide can be used as the SiO₂ precursor and the TiO₂ precursor.

As the substrate, a quartz glass-made target (for example, a seed rod described in JP-A-63-24973) can be used. Further, the substrate is not limited to a rod shape, and a plate-shaped substrate may be used.

### (Step (a'))

Furthermore, between step (a) and step (b), it is preferred to carry out presintering in order to increase the bulk density of the porous glass body.

It is considered that Si-OH is present on the surface of the particle constituting the porous glass body. It is also considered that as the bulk density is increased, the specific surface area of the particle is decreased and the amount of Si-OH present in the porous glass body is relatively decreased. That is, it is considered that as the bulk density of the porous glass body is increased, the amount of Si-OH present in the porous glass body is decreased and the amount of HF generated by the reaction caused at the time of introducing fluorine into the porous glass body is relatively decreased. As a result, it is considered that the elimination of fluorine from the glass body in step (c) can be suppressed due to the reason described below.

The presintering is preferably carried out at a temperature of 1,100°C or higher, and more preferably 1,150°C or higher. When the temperature is too low, there is concern that sintering of the particles does not proceed and the bulk density does not change.

On the other hand, the presintering is preferably carried out at a temperature of 1,350°C or lower, and more preferably 1,300°C or lower. When the temperature is too high, the sintering may excessively proceed and closed pores may be present. As a result, there is concern that, for example, variation in the fluorine concentration occurs when fluorine is introduced into the porous glass body in step (b), bubbles remain after the transparent vitrification in step (c), or the amount of Si-OH is remarkably decreased, thereby the reaction with elemental fluorine (F₂) becomes slow.

The bulk density of the porous glass body after the presintering is preferably 0.1 g/cm³ or higher, more preferably 0.2 g/cm³ or higher, further preferably 0.25 g/cm³ or higher, and particularly preferably 0.3 g/cm³ or higher. Where the bulk density is too low, the specific surface area of the particle is increased and the amount of Si-OH is increased. As a result, there are concerns that the elimination of fluorine in step (c) cannot be suppressed and it is difficult to make the transparent glass body have the fluorine concentration of 3,000 ppm or higher.

On the other hand, the bulk density of the porous glass body after the presintering is preferably 1.0 g/cm³ or lower, more preferably 0.9 g/cm³ or lower, and particularly preferably 0.8 g/cm³ or lower. Where the bulk density is too high, closed pores are present. As a result, there are concerns that variation in the fluorine concentration occurs at the introduction of fluorine into the porous glass body in step (b) and bubbles remain after the transparent vitrification in step (c).

### (Step (b))

The porous glass body obtained in step (a) is maintained in a reaction vessel under an elemental fluorine (F₂)-containing atmosphere under condition of a pressure of P_{b1} and a temperature of 400°C or lower, and then maintained in the reaction vessel under condition of a pressure P_{b2} lower than the pressure P_{b1} and a temperature of 400°C or lower, wherein the pressure P_{b2} is lower than the atmospheric pressure, and wherein a temperature T_{b2} at which the glass body is maintained under the condition of the pressure P_{b2} is equal to or higher than a temperature T_{b1} at which the glass body is maintained under the condition of the pressure P_{b1}, to thereby obtain a fluorine-containing porous glass body.

Hereinafter, step (b) may be divided into the following two steps, and also referred to as "step (b1)" and "step (b2)":
(b1) a step of maintaining the porous glass body in a reaction vessel under an elemental fluorine (F₂)-containing atmosphere under condition of a pressure P_{b1} and a temperature of 400°C or lower; and
(b2) a step of maintaining the fluorine-containing porous glass body obtained in step (b1) in the reaction vessel under condition of a pressure P_{b2} lower than the pressure P_{b1} and a temperature of 400°C or lower, wherein the pressure P_{b2} is lower than the atmospheric pressure, and wherein a temperature T_{b2} at which the glass body is maintained under the condition of the pressure P_{b2} is equal to or higher than a temperature T_{b1} at which the glass body is maintained under the condition of the pressure P_{b1}.

The reaction vessel may be selected from known reactors. Specifically, such as an internal-stirred type tank reaction vessel having stirring blades inside the reactor, a continuous stirred-tank reaction vessel (CSTR) that can continuously or intermittently supply and discharge elemental fluorine (F₂), or a piston flow type reaction vessel (PFR) is suitable for use as the reaction vessel, from the viewpoint that the contact between elemental fluorine (F₂) and the porous glass body can be efficiently conducted.

The reaction vessel is preferably that the inner wall and the internal facility thereof are constituted of a material having corrosion resistance against elemental fluorine (F₂). In addition, the material is preferably a material which does not generate gaseous impurities in step (b), or may generate any gaseous material and the gaseous material does not become impurities. This is because if an impurity is mixed into a synthetic quartz glass, there is a concern that optical properties such as haze or physical properties such as a coefficient of thermal expansion are deteriorated.

Specifically, the material suitably utilized as the inner wall and the internal facility of the reaction vessel includes metals such as nickel, copper and iron, alloys such as stainless steel (SUS316), monel, inconel and hastelloy, glasses such as synthetic quartz glass and soda lime glass, metal halides such as calcium fluoride and nickel fluoride, and perhalogenated resins such as polytetrafluoroethylene, tetrafluoroethyleneperfluoro(alkyl vinyl ether) copolymer (referred to as "PFA", hereinafter) and polychlorotrifluoroethylene.

Further, in order to improve corrosion resistance against elemental fluorine (F₂), it is preferable that a passivation coating layer made of fluoride or oxide is formed on the surface of inner wall and internal facility of the reaction vessel. It is more preferable that a passivation coating layer made of fluoride is formed. The passivation of the surface can be carried out by exposing the surface to an elemental fluorine (F₂)-containing atmosphere.

In order to make the pressure P_{b2} of step (b2) lower than the pressure P_{b1} of step (b1) and lower than the atmospheric pressure, the reaction vessel is provided with an aspirator or a vacuum pump. The vacuum pump may be selected from known vacuum pumps. Specifically, the vacuum pump includes rotary pumps, diaphragm pumps, scroll pumps, diffusion pumps, turbo molecular pumps, ion pumps, cryopumps and mechanical booster pumps.

### (Step (by))

The porous glass body is maintained in the reaction vessel under an elemental fluorine (F₂)-containing atmosphere under condition of a pressure P_{b1} and a temperature of 400°C or lower.

A fluorine-containing porous glass body containing 3,000 ppm or more of fluorine can be obtained at a low temperature of 400°C or lower, as mentioned above, by using high-reactive elemental fluorine (F₂) as a fluorine source to introduce fluorine into the porous glass body.

The elemental fluorine (F₂)-containing atmosphere is an atmosphere consisting of only elemental fluorine (F₂) or a mixed gas of elemental fluorine (F₂) diluted with an inert gas in the initial step of step (b1). As step (b1) proceeds, the atmosphere contains HF produced by the reaction occurred during introduction of fluorine into the porous glass body.

The inert gas is a gas inert against reactions which occur at the time of introduction of fluorine into the porous glass body. The inert gas specifically includes nitrogen gas, and a rare gas such as helium gas or argon gas.

However, where water is contained in the inert gas, there is the possibility that water reacts with elemental fluorine (F₂). Therefore, the dew point of the inert gas is preferably -10°C or lower, more preferably -40°C or lower, and particularly preferably - 60°C or lower.

From the standpoints of easiness of reaction control and economical efficiency, the elemental fluorine (F₂)-containing atmosphere is preferably a mixed gas obtained by diluted elemental fluorine (F₂) with an inert gas, and particularly preferably a mixed gas obtained by diluting elemental fluorine (F₂) with nitrogen gas.

From the standpoints of easiness of reaction control and economical efficiency, the concentration of elemental fluorine (F₂) in the mixed gas obtained by diluted elemental fluorine (F₂) with nitrogen gas is preferably from 100 ppm by mol to 50% by mole, and more preferably from 1,000 ppm by mole to 30% by mole. When the concentration of elemental fluorine (F₂) is too low, a rate of introducing fluorine into the porous glass body may decrease and the reaction time may be prolonged. On the other hand, when the concentration of elemental fluorine (F₂) is too high, a rate of introducing fluorine into the porous glass body may be increased and the reaction control may become difficult.

The internal pressure P_{b1} of the reaction vessel in step (b1) is preferably 1 MPa or lower, more preferably 0.6 MPa or lower, and further preferably 0.3 MPa or lower in gauge pressure. As the internal pressure P_{b1} of the reaction vessel decreases, the adsorption of elemental fluorine (F₂) can be prevented, and a period t_{b2} during which the porous glass body is maintained under the condition of a pressure P_{b2} in step (b2) can be reduced. Further, the removal of HF from the porous glass body can be promoted and HF can be thus efficiently discharged.

The internal pressure P_{b1} of the reaction vessel in step (b1) is preferably 0 MPa or higher in gauge pressure. When the internal pressure P_{b1} of reaction vessel is lower than the atmospheric pressure, there is possibility that the outside air is sucked into the reaction vessel. Such as water and volatile organic substances contained in the outside air react with elemental fluorine (F₂) to generate HF.

The internal temperature T_{b1} of the reaction vessel in step (b1) is 400°C or lower, preferably 300°C or lower, more preferably 250°C or lower, further preferably 200°C or lower, and particularly preferably 100°C or lower. As the internal temperature T_{b1} of the reaction vessel decreases, the choices of the raw material of the reaction vessel widens and facility costs are reduced. Further, in the case where a solid metal fluoride is present in the reaction vessel, the internal temperature of the reaction vessel is preferably 200°C or lower, more preferably 150°C or lower, and further preferably 100°C or lower. As the internal temperature of the reaction vessel decreases, the HF adsorbing ability of the solid metal fluoride improves.

The internal temperature T_{b1} of the reaction vessel in step (b1) is preferably - 50°C or higher, more preferably 0°C or higher, and further preferably 20°C or higher. As the internal temperature T_{b1} of the reaction vessel increases, diffusion of elemental fluorine (F₂) into the porous glass body can be facilitated, and an introduction period of fluorine into the porous glass body can be reduced.

In step (b1), a period t_{b1} during which the porous glass body is maintained at the pressure P_{b1} is preferably 1 minute to 1 week, and more preferably 10 minutes to 2 days.

The solid metal fluoride may be present in the reaction vessel in step (b1). The presence of the solid metal fluoride in the reaction vessel enables HF, generated by the reaction occured during introduction of fluorine into the porous glass body, to be adsorbed on the solid metal fluoride. This prevents generation of new Si-OH in the porous glass body and reduces proton sources in the porous glass body. As a result, due to the reason described below, elimination of fluorine from the glass body in step (c) can be prevented. The solid metal fluoride may be present in the reaction vessel in step (b2).

The solid metal fluoride is preferably selected from the group consisting of fluoride of alkali metals, fluoride of alkaline earth metals and mixtures thereof. Particularly preferred is sodium fluoride. The form of solid metal fluoride is not particularly limited, and selected from any forms suitable for disposing it in the reaction vessel.

Further, in order to uniformly introduce fluorine into porous glass body within a short period of time, it is preferable that the reaction vessel, in which the porous glass body is disposed, is maintained under the condition of an internal pressure lower than the atmospheric pressure, and then elemental fluorine (F₂) is supplied into the reaction vessel until the internal pressure reaches a prescribed pressure.

The internal pressure of the reaction vessel at which the internal pressure of the reaction vessel is lower than the atmospheric pressure is maintained preferably at 13,000 Pa or lower and particularly preferably 1,300 Pa or lower.

The internal temperature of the reaction vessel at which the internal pressure of the reaction vessel is lower than the atmospheric pressure is preferably 30°C to 300°C, more preferably 50°C to 200°C, and particularly preferably 60°C to 150°C, in order to realize efficient deaeration.

Owing to maintaining the internal pressure of the reaction vessel lower than the atmospheric pressure and deaerating the reaction vessel, water or volatile organic substances present in the reaction vessel can be removed, and the generation of HF by reaction of the water or volatile organic substances with elemental fluorine (F₂) can be prevented.

In step (b1), it is preferable that elemental fluorine (F₂) is continuously or intermittently supplied into the reaction vessel and the gas is continuously or intermittently discharged from the reaction vessel and more preferable that elemental fluorine (F₂) is continuously supplied to the reaction vessel and a part of the gas is continuously discharged from the reaction vessel with maintaining the internal pressure P_{b1}. Owing to discharging a gas containing HF from the reaction vessel, generation of new Si-OH in the porous glass body can be prevented and the proton sources in the porous glass body can be reduced. As a result, due to the following reason, elimination of fluorine from the glass body in step (c) can be prevented.

### (Step (b2))

Since the use of elemental fluorine (F₂) as a fluorine source in step (b1) involves a reaction generating HF, Si-OH serving as a proton source is newly generated in the porous glass body due to the reason described below. Furthermore, the fluorine-containing porous glass body is handled in the outside of the reaction vessel when the porous glass body is moved from the reaction vessel to a vitrification furnace, unreacted elemental fluorine (F₂) adsorbed on the fluorine-containing porous glass body reacts with moisture in the air to generate HF and thereby newly generating Si-OH serving as a proton source in the porous glass body due to the reason described below. As such, with only step (b1), Si-OH serving as a proton source is always present in the porous glass body and, as a result, fluorine introduced into the porous glass body is eliminated at the time of transparent vitrification in step (c).

Accordingly, in step (b2), the fluorine-containing porous glass body obtained in step (b1) is maintained in the same reaction vessel under condition of a pressure P_{b2} lower than the pressure P_{b1} and a temperature of 400°C or lower, thereby removing unreacted elemental fluorine (F₂) adsorbed on the fluorine-containing porous glass body from the porous glass body. The pressure P_{b2} in step (b2) is lower than the atmospheric pressure, and a temperature T_{b2} at which the glass body is maintained under the condition of the pressure P_{b2} in step (b2) is equal to or higher than a temperature T_{b1} at which the glass body is maintained under the condition of the pressure P_{b1}.

The same reaction vessel as step (b1) is used in step (b2) in order to prevent the fluorine-containing porous glass body from coming into contact with moisture in the air.

The internal pressure P_{b2} of the reaction vessel in step (b2) is set lower than the internal pressure P_{b1} of the reaction vessel in step (b1). From the viewpoints of efficient discharge of a gas containing HF from the reaction vessel and facilitation of removal of elemental fluorine (F₂) from inside the porous glass body, the internal pressure P_{b2} of the reaction vessel is lower than the atmospheric pressure, preferably 13,000 Pa or lower, and more preferably 1,300 Pa or lower in absolute pressure.

The internal pressure P_{b2} of the reaction vessel in step (b2) is preferably 0.01 Pa or higher, more preferably 0.1 Pa or higher, and further preferably 1 Pa or higher in absolute pressure. When the internal pressure P_{b2} of the reaction vessel is too low, a high-vacuum apparatus may be required, thus increasing facility costs.

The gas atmosphere in step (b2) is not limited so long as it is inert against unreacted elemental fluorine (F₂) adsorbed on the porous glass body. It is preferred that the gas atmosphere used in step (b₁) is continuously used with no change, or the internal atmosphere of reaction vessel is replaced with an inert gas after step (b1). The inert gas includes a rare gas such as helium gas or argon gas and nitrogen gas

The inert gas may be continuously supplied to the reaction vessel, so long as the pressure P_{b2} is maintained in step (b2). When the pressure P_{b2} can be maintained, depending on the flow of the gas supplied to or discharged from the reaction vessel, a gas containing HF can be more efficiently discharged from the reaction vessel and a period t_{b2} during which the porous glass body is maintained under the condition of the pressure P_{b2} can be reduced.

The internal temperature T_{b2} of the reaction vessel in step (b2) is 400°C or lower, preferably 320°C or lower, more preferably 270°C or lower, and further preferably 250°C or lower. As the internal temperature T_{b2} of the reaction vessel decreases, the choices of the material for the reaction vessel widens and facility costs are reduced.

The internal temperature T_{b2} of the reaction vessel in step (b2) is preferably 20°C or higher, more preferably 50°C or higher, and further preferably 60°C or higher. As the internal temperature T_{b2} of the reaction vessel increases, removal of elemental fluorine (F₂) adsorbed on the porous glass body can be facilitated and a period t_{b2} during which the porous glass body is maintained at the pressure P_{b2} can be reduced.

The internal temperature T_{b2} of the reaction vessel in step (b2) is equal to or higher than the internal temperature T_{b1} of the reaction vessel in step (b1). Owing to setting T_{b1}≤T_{b2}, the diffusion rate of elemental fluorine (F₂) in step (b2) can be adjusted to a level higher than that in step (b1) and the unreacted elemental fluorine (F₂) can be efficiently discharged.

In step (b2), a period t_{b2} during which the porous glass body is maintained under the condition of the pressure P_{b2} is preferably equal to or longer than 30 minutes and equal to or shorter than 1 day, more preferably equal to or longer than 1 hour and equal to or shorter than 16 hours, and further preferably equal to or longer than 2 hours and equal to or shorter than 10 hours. When the period t_{b2} is too short, the unreacted elemental fluorine (F₂) adsorbed on the fluorine-containing porous glass body may be not efficiently removed. When the period t_{b2} is too long, the removal rate of elemental fluorine (F₂) may be low and production efficiency or costs may be disadvantageous.

The unreacted elemental fluorine (F₂) adsorbed on the fluorine-containing porous glass body can be measured, for example, in accordance with the following method.

A 100 g of the fluorine-containing porous glass body is added into a 1L vessel charged with nitrogen gas and maintained at 25°C for 10 hours. And then, elemental fluorine (F₂) concentration contained in the gas in the vessel is measured using a constant-potential electrolysis-type gas detector.

### (Step (c))

The fluorine-containing porous glass body obtained in step (b) is heated in a vitrification furnace to a transparent vitrification temperature, to thereby obtain a fluorine-containing transparent glass body.

The reaction vessel used in step (b) is unsuitable for continuously use as the vitrification furnace used at the following transparent vitrification temperature in terms of heat resistance. For this reason, the fluorine-containing porous glass body obtained in step (b) is moved from the reaction vessel to the vitrification furnace. For example, there is a method in which the porous glass body is moved so that it does not come into contact with the air by using a movable air-tight container. However, this method has a disadvantage of complicated handling. Further, this method has a problem that, in order to handle bulky samples larger than 10 kg, a large facility is required, thereby causing an increase in cost. That is, the fluorine-containing porous glass body is necessarily required to come into contact with the air in order to move with a simpler manner.

The transparent vitrification temperature is commonly 1,350°C to 1,800°C, and preferably 1,400°C to 1,750°C.

The inner atmosphere of the vitrification furnace is preferably an atmosphere composed of only an inert gas (such as helium gas or argon gas), or an atmosphere containing an inert gas (such as helium gas or argon gas) as a main component.

The internal pressure of the vitrification furnace may be equal to or lower than the atmospheric pressure. When the internal pressure is lower than the atmospheric pressure, it is preferably 13,000 Pa or lower.

Although the vitrification of step (c) is carried out at a pressure lower than the atmospheric pressure, it is confirmed that, in a case where step (b2) is not carried out, fluorine is eliminated from the fluorine-containing porous glass body during step (c). The reason is considered to be that, when a fluorine-containing glass body moves from the reaction vessel to the vitrification furnace, unreacted elemental fluorine (F₂) adsorbed thereon reacts with moisture in the air to generate HF, and Si-OH serving as a proton source is newly generated in the porous glass body.

### (Step (d))

The fluorine-containing transparent glass body obtained in step (c) is subjected to heating to a softening temperature or higher and formed into a desired shape, thereby obtaining a fluorine-containing formed glass body.

The forming temperature is preferably from 1,500°C to 1,800°C. When the temperature is 1,500°C or higher, the viscosity is sufficiently lowered so that the fluorine-containing transparent glass body deforms due to substantially its own weight. Furthermore, the growth of cristobalite which is crystal phase of SiO₂ (in the case of a TiO₂-SiO₂ glass body, further, growth of rutile or anatase which is crystal phase of TiO₂) is difficult to occur, whereby the occurrence of so-called devitrification can be prevented. At a temperature of 1,800°C or lower, sublimation of SiO₂ can be suppressed.

In the case of carrying out step (d), step (c) and step (d) can be carried out continuously or simultaneously.

### (Step (e))

The transparent glass body obtained in step (c) is maintained at a temperature of 600°C to 1,200°C for 1 hour, and then subjected to annealing treatment in which the temperature is decreased to 500°C or lower at an average temperature decreasing rate of 10°C/hr or lower, thereby controlling a fictive temperature of the glass.

The formed glass body having a temperature of from 1,200°C obtained in step (d) is subjected to annealing treatment in which the temperature is decreased to 500°C or lower at an average temperature decreasing rate of 60°C/hr or lower, thereby controlling a fictive temperature of the glass.

After decreasing the temperature to 500°C or lower, the glass body can be allowed to stand for natural cooling.

The atmosphere in step (e) is preferably an atmosphere composed of only an inert gas (such as helium gas, argon gas or nitrogen gas), an atmosphere containing the inert gas as a main component, or the air atmosphere.

The pressure in step (e) is preferably reduced pressure or normal pressure.

To achieve lower fictive temperature, it is effective to cool during a temperature region near an annealing point and a strain point of the glass at lower cooling rate. Specifically, in the cooling profile of step (e), the lowest cooling rate is preferably 10°C/hr or lower, more preferably 5°C/hr or lower, further preferably 3°C/hr or lower, and particularly preferably 2°C/hr or lower.

### (Actions and Effects)

The method for production of synthetic quartz glass according to the present invention described above uses high-reactive elemental fluorine (F₂) as a fluorine source, thus enabling introduction of fluorine into the porous glass body at a low temperature of 400°C or lower. Further, due to the following reason, although elemental fluorine (F₂) is used as a fluorine source, fluorine concentration of the finally-obtained synthetic quartz glass can be achieved steadily to be 3,000 ppm or higher.

### Reason:

The porous glass body involves structurally unstable moieties among Si-O bonds of the SiO₂ network constituting the porous glass body and moieties having unstable functional groups such as Si-OH. Formation of Si-F bonds can be facilliated by reacting, in step (b), these unstable moieties with elemental fluorine (F₂) having reactivity higher than SiF₄, and thus 3,000 ppm or more of fluorine can be introduced into the porous glass body at a low temperature of 400°C or lower.

Meanwhile, in the case where a proton source such as Si-OH is present in a reaction field in step (c), HF is generated at the proton source and is thus eliminated from the glass body in accordance with the following reaction scheme.

Si-OH + Si-F → Si-O-Si + HF

Further, HF reacts with a relatively stable Si-O-Si network in step (c), for example, to cleave O-Si network of Si-O-SiF₃, and thereby generating a compound with a low molecular weight such as SiF₄ or SiF₃OH. These compounds with a low molecular weight are gasified and are thus eliminated from the reaction field during the transparent vitrification. It is considered that fluorine introduced into the fluorine-containing porous glass body is decreased in step (c) due to the aforementioned actions. Accordingly, it is considered that the amount of fluorine eliminated from the fluorine-containing porous glass body during the transparent vitrification can be reduced by reducing proton sources present in the porous glass body before step (c) and/or preventing generation of proton sources in the porous glass body.

Accordingly, as a result of a variety of extensive and intensive studies, the inventors of the present invention confirmed that where the fluorine-containing porous glass body obtained in step (b) adsorbs unreacted elemental fluorine (F₂) thereon, the unreacted elemental fluorine (F₂) increases proton sources present in the porous glass body, thus contributing to the amount of fluorine eliminated during transparent vitrification in step (c).

That is, when the fluorine-containing porous glass body obtained in step (b) and adsorbing unreacted elemental fluorine (F₂) thereon is handled in outside the reaction vessel (for example, when the glass body moves from the reaction vessel to the vitrification furnace), the unreacted elemental fluorine (F₂) reacts with moisture in the air to generate HF.

2H₂O + 2F₂ → 2HF + 2HOF → 4HF + O₂

Since this HF reacts with the stable Si-O-Si network of the porous glass body to produce Si-OH, the proton sources present in the porous glass body increase.

Accordingly, in the present invention, owing to actively removing the unreacted elemental fluorine (F₂) adsorbed on the fluorine-containing porous glass body in step (b), the amount of fluorine eliminated during transparent vitrification in step (c) can be reduced and a fluorine concentration of the finally-obtained synthetic quartz glass can be achieved to be 3,000 ppm or higher.

### <Synthetic Quartz Glass>

### (Fluorine Concentration)

In accordance with the production method of the present invention, synthetic quartz glass having a fluorine concentration of 3,000 ppm or higher can be prepared. The fluorine concentration of the synthetic quartz glass is preferably 5,000 ppm or higher and more preferably 7,000 ppm or higher.

The fluorine concentration can be obtained with an FP (fundamental parameter) method utilizing samples having known fluorine concentrations by means of a fluorescence X-ray.

In accordance with the production method of the present invention, synthetic quartz glass having extremely small variation of a fluorine concentration, that is, extremely small variation width ΔF of a fluorine concentration, can be produced. The variation width ΔF of the fluorine concentration of the synthetic quartz glass is preferably within ±10%, more preferably within ±8%, further preferably within ±5%, and particularly preferably within ±3%, to the average value of the fluorine concentration. For example, in the case of a TiO₂-SiO₂ glass having the average value of the fluorine concentration of 1,000 ppm as a reference, the fluorine concentration is preferably within a range of from 900 ppm to 1,100 ppm and particularly preferably within a range of from 970 ppm to 1,030 ppm.

The variation width ΔF of the fluorine concentration of the formed synthetic quartz glass body obtained through step (d) or step (e) can be measured by, for example, the following procedures.

In the cylindrical formed synthetic quartz glass body formed to have a diameter of about 85 mm and a thickness of 50 mm by grinding the outer peripheral portion thereof, two points obtained by moving two intersections between an optional diameter and a circumference on the bottom of the cylinder toward the center by about 6 mm, are taken as point A and point B, respectively. The glass body is sliced along the planes passing the point A and the point B and each perpendicular to direction of the diameter (hereinafter referred to as plane A and plane B, respectively) to remove the outer peripheral portions. The resulting glass is further sliced along the planes perpendicular to the direction of the diameter with an interval of 12 mm toward the plane B from the plane A, thereby obtaining six glass pieces each having a thickness of 12 mm. To the obtained six glass pieces, six points of average fluorine concentrations on the surfaces at the same side to the plane A of the respective glass pieces and one point of an average fluorine concentration on the surface of the plane B, total seven points of fluorine concentrations, are obtained by fluorescent X-ray using samples having known fluorine concentrations with an FP method (fundamental parameter method). The fluorine concentration variation width (ΔF = [difference between maximum value and minimum value] / 2) in the whole formed synthetic quartz glass body is obtained from the average value of seven points of fluorine concentrations obtained and the difference between the maximum value and the minimum value.

### (Fictive Temperature)

In accordance with the production method of the present invention, synthetic quartz glass having extremely small variation width (ΔTf) of fictive temperature can be obtained. The variation width ΔTf of the fictive temperature of the synthetic quartz glass is preferably within 50°C, more preferably within 30°C, further preferably within 15°C, and particularly preferably within 5°C

The variation width ΔTf of the fictive temperature of the formed synthetic quartz glass body obtained through step (d) or step (e) can be measured by, for example, the following procedures.

Glass pieces are collected from two sites in the central portion of a cylindrical formed glass body, two sites in the outer peripheral portion thereof and two sites in the intermediate portion thereof, respectively, and mirror polishing is carried out for these glass pieces. An absorption spectrum is obtained on each of mirror-polished glass pieces by using an infrared spectrophotometer (Magna 760, manufactured by Nicolet). On this occasion, the data interval is adjusted to about 1.0 cm⁻¹ and an average value after scanning 64 times is used for the absorption spectrum. In the thus obtained infrared absorption spectrum, the peak observed at around 2,260 cm⁻¹ is derived from harmonic of stretching vibration induced by the Si-O-Si bond of the synthetic quartz glass. Using the peak position, a calibration curve is prepared by glasses whose fictive temperatures are known and which each has the same composition and then the fictive temperature is determined. The fictive temperature is determined at 2 points in each glass pieces, and the respective fictive temperatures of the central portion, the intermediate portion and the outer peripheral portion are calculated by averaging the fictive temperatures of 2 points. And the variation width of the fictive temperature (ΔTf=[difference between maximum value and minimum value of average fictive temperature]) in the whole formed glass body is obtained from the difference between the maximum value and the minimum value of those average fictive temperatures.

### (TiO₂-SiO₂ Glass)

TiO₂ content of the TiO₂-SiO₂ glass is preferably from 1 to 12%, more preferably from 3 to 10%, and particularly preferably from 5 to 8%. Where the TiO₂ content is too small, there is concern that zero expansion is not achieved. Where the TiO₂ content is too large, there is a possibility that a coefficient of thermal expansion becomes negative.

The fictive temperature of the TiO₂-SiO₂ glass is preferably 1,200°C or lower, more preferably 1,100°C or lower, and particularly preferably 1,000°C or lower. Where the fictive temperature exceeds 1,200°C, the temperature range of zero-expansion is narrow, and there is concern for being insufficient for a material used as an optical member for EUVL. In order to expand the temperature range of zero expansion, the fictive temperature is preferably 950°C or lower and more preferably 900°C or lower.

The coefficient of thermal expansion of the TiO₂-SiO₂ glass can be adjusted by producing the TiO₂-SiO₂ glass by the production method of the present invention, evaluating its coefficient of thermal expansion, and feeding back the results to a fluorine concentration, a TiO₂ content and a fictive temperature. For example, in the case that the TiO₂-SiO₂ glass obtained by the production method of the present invention of which a temperature range of a coefficient of thermal expansion of 0±5 ppb/°C is from 18 to 26°C is changed so as to have the temperature range of from 18 to 40°C, the change can be achieved by increasing the fluorine concentration, decreasing the fictive temperature or increasing the TiO₂ content.

Hereinafter, the present invention will be described with reference to examples in more detail, but is not limited thereto. Examples 1 to 5 are Comparative Examples and Examples 6 to 10 are Examples.

### (Fluorine Concentration)

The fluorine concentration of a formed TiO₂-SiO₂ glass body obtained was obtained with FP (fundamental parameter) method utilizing samples having known fluorine concentrations by means of using a fluorescence X-ray.

### [Example 1]

### (Step (a))

TiO₂-SiO₂ glass fine particles obtained by gasifying TiCl₄ and SiCl₄ each serving as a glass-forming material of a TiO₂-SiO₂ glass, respectively, then mixing these, and subjected to heat hydrolysis (flame hydrolysis) in an oxyhydrogen flame were deposited and grown onto a substrate, to thereby form a porous TiO₂-SiO₂ glass body.

### (Step (a'))

Since it is difficult to handle the porous TiO₂-SiO₂ glass body thus obtained without any treatment, the porous TiO₂-SiO₂ glass body was maintained in the air at 1,200°C for 4 hours in a state still deposited on the substrate, and the porous TiO₂-SiO₂ glass body was separated from the substrate to obtain a porous TiO₂-SiO₂ glass body having a diameter of about 80 mm, a length of about 100 mm and a bulk density of 0.3 g/cm³.

### (Step (b))

The porous TiO₂-SiO₂ glass body was supported with a PFA-made jig and was then placed together with the jig in a nickel reaction vessel.

### (Step (b1-α))

The reaction vessel was heated from the outside thereof using an oil bath to increase the internal temperature of the reaction vessel to 80°C from ambient temperature at a temperature increasing rate of 0.5 to 2°C/min.

While the internal temperature of the reaction vessel was maintained at 80°C, vacuum deaeration was carried out until the internal pressure of the reaction vessel reached 2,660 Pa or lower in absolute pressure, and the reaction vessel was maintained for one hour.

Into the reaction vessel was introduced a mixed gas of elemental fluorine (F₂) diluted to 20% by mole with nitrogen gas having a dew point of -60°C or lower and the reaction vessel was maintained at a pressure P_{b1} of 0.21 MPa in gauge pressure and at a temperature T_{b1} of 140°C for 24 hours to obtain a fluorine-containing porous TiO₂-SiO₂ glass body.

### (Step (c))

The fluorine-containing porous TiO₂-SiO₂ glass body was moved to a vitrification furnace so that it was exposed to the air. The porous TiO₂-SiO₂ glass body was heated to 1,360°C under reduced pressure in the vitrification furnace, maintained for 3 hours, subsequently heated to a transparent vitrification temperature (1,450°C) under a 100% helium gas atmosphere, and maintained for 4 hours, to thereby obtain a fluorine-containing transparent TiO₂-SiO₂ glass body.

### (Step (d))

The fluorine-containing transparent TiO₂-SiO₂ glass body was moved to a carbon furnace and heated to a softening temperature or higher (1,700°C) under an argon gas atmosphere and formed to a circumferential shape, thereby obtaining a fluorine-containing formed TiO₂-SiO₂ glass body. The fluorine concentration of the formed TiO₂-SiO₂ glass body was measured. The result is shown in Table 1.

### (Example 2)

A fluorine-containing formed TiO₂-SiO₂ glass body was obtained in the same manner as in Example 1, except that a pellet of sodium fluoride (manufactured by Stella Chemifa Corporation) was introduced into the reaction vessel in step (b) after the porous TiO₂-SiO₂ glass body was placed in the reaction vessel so that the pellet did not come into contact with the porous TiO₂-SiO₂ glass body. The fluorine concentration of the formed TiO₂-SiO₂ glass body was measured. The result is shown in Table 1.

### (Example 3)

A fluorine-containing formed TiO₂-SiO₂ glass body was obtained in the same manner as in Example 2, except that the pressure P_{b1} and the temperature T_{b1} were changed to 0.18 MPa in gauge pressure and 80°C, respectively in step (b1-α). The fluorine concentration of the formed TiO₂-SiO₂ glass body was measured. The result is shown in Table 1.

### (Example 4)

A fluorine-containing formed TiO₂-SiO₂ glass body was obtained in the same manner as in Example 3, except that when the fluorine-containing porous TiO₂-SiO₂ glass body was moved from the reaction vessel to the vitrification furnace in step (c), it came into contact with the air for a long period of time, as compared to Example 3. The fluorine concentration of the formed TiO₂-SiO₂ glass body was measured. The result is shown in Table 1.

### (Example 5)

A 100 g of the fluorine-containing porous TiO₂-SiO₂ glass body obtained in step (b1-α) in the same manner as in Example 3 was placed into a 1L vessel of which the inner atmosphere had been replaced with nitrogen gas, and maintained at 25°C for 10 hours, and the concentration of fluorine contained in the gas in the vessel was measured using a constant-potential electrolysis-type gas detector.

### (Example 6)

A fluorine-containing formed TiO₂-SiO₂ glass body was obtained in the same manner as in Example 1, except that the pressure P_{b1} and the temperature T_{b1} were changed to 0.18 MPa in gauge pressure and 80°C, respectively in step (b1-α), and the following step (b2) was carried out between step (b1-α) and step (c). The fluorine concentration of the formed TiO₂-SiO₂ glass body was measured. The result is shown in Table 1.

### (Step (b2))

The fluorine-containing porous TiO₂-SiO₂ glass body was maintained in the same reaction vessel as Step (b1-α) at a pressure P_{b2} of 266 Pa in absolute pressure and at a temperature T_{b2} of 140°C for 3 hours, to thereby obtain fluorine-containing porous TiO₂-SiO₂ glass body.

### (Example 7)

A fluorine-containing formed TiO₂-SiO₂ glass body was obtained in the same manner as in Example 6, except that, in step (b), a pellet of sodium fluoride (manufactured by Stella Chemifa Corporation) was introduced into the reaction vessel after the porous TiO₂-SiO₂ glass body was placed in the reaction vessel so that the pellet did not come into contact with the porous TiO₂-SiO₂ glass body, and step (b1-α) was changed to the following step (b1-β). The fluorine concentration of the formed TiO₂-SiO₂ glass body was measured. The result is shown in Table 1.

### (Step (b1-β))

(1) The reaction vessel was heated from the outside thereof using an oil bath to increase the internal temperature of the reaction vessel to 80°C from ambient temperature at a temperature increasing rate of 0.5 to 2°C/min.
(2) While the internal temperature of the reaction vessel was maintained at 80°C, vacuum deaeration was carried out until the internal pressure of the reaction vessel reached 2,660 Pa or lower in absolute pressure, and the reaction vessel was maintained for one hour.
(3) Into the reaction vessel was introduced a mixed gas of elemental fluorine (F₂) diluted to 20% by mole with nitrogen gas having a dew point of -60°C or lower and the reaction vessel was maintained at a pressure P_{b1} of 0.18 MPa in gauge pressure and at a temperature T_{b1} of 80°C for 6 hours.
(4) The gas in the reaction vessel was purged to lower the internal pressure to the atmospheric pressure and then nitrogen gas was flowed therethrough for one hour at a rate of 100 ml/min, to thereby replace elemental fluorine (F₂) in the reaction vessel with the nitrogen gas.

Then, the operations (2) to (4) were further repeated three times so that a period t_{b1} during which the porous TiO₂-SiO₂ glass body was maintained under the condition of pressure P_{b1} was 24 hours in total, to thereby obtain a fluorine-containing porous TiO₂-SiO₂ glass body.

### (Example 8)

A fluorine-containing formed TiO₂-SiO₂ glass body was obtained in the same manner as in Example 6, except that a pellet of sodium fluoride (manufactured by Stella Chemifa Corporation) was introduced into the reaction vessel in step (b) after the porous TiO₂-SiO₂ glass body was placed in the reaction vessel so that the pellet did not come into contact with the porous TiO₂-SiO₂ glass body. The fluorine concentration of formed TiO₂-SiO₂ glass body was measured. The result is shown in Table 1.

### (Example 9)

A fluorine-containing formed TiO₂-SiO₂ glass body was obtained in the same manner as in Example 7, except that step (b1-β) was changed to the following step (b1-γ). The fluorine concentration of the formed TiO₂-SiO₂ glass body was measured. The result is shown in Table 1.

### (Step (b1-γ))

The reaction vessel was heated from the outside thereof using an oil bath to increase the internal temperature of the reaction vessel to 80°C from ambient temperature at a temperature increasing rate of 0.5 to 2°C/min.

While the internal temperature of the reaction vessel was maintained at 80°C, vacuum deaeration was carried out until the internal pressure of the reaction vessel reached 2,660 Pa or lower in absolute pressure, and the reaction vessel was maintained for one hour.

A mixed gas of elemental fluorine (F₂) diluted to 20% by mole with nitrogen gas having a dew point of -60°C or lower was introduced until the internal pressure of the reaction vessel reached the atmospheric pressure.

The mixed gas of elemental fluorine (F₂) diluted to 20% by mole with nitrogen gas having a dew point of -60°C or lower was continuously supplied at a flow rate of 25 ml/min and the gas in the reaction vessel was continuously discharged so that the internal pressure of the reaction vessel was maintained at the atmospheric pressure, and the reaction vessel was maintained at an internal pressure P_{b1} of 0.0 MPa in gauge pressure and at a temperature T_{b1} of 80°C for 6 hours to obtain a fluorine-containing porous TiO₂-SiO₂ glass body.

**[TABLE 1]**

| | Step (b1) | | | | | Step (b2) | | | Fluorine concentration [ppm] |
|---|---|---|---|---|---|---|---|---|---|
| | Type | T_{b1} [°C] | P_{b1} [MPa] | t_{b1} [hr] | Presence ofNaF | T_{b2} [°C] | P_{b2} [Pa] | t_{b2} [hr] | |
| EX.1 | α | 140 | 0.21 | 24 | Absent | - | - | - | 470 |
| EX.2 | α | 140 | 0.21 | 24 | Present | - | - | - | 1,900 |
| EX.3 | α | 80 | 0.18 | 24 | Present | - | - | - | 2,900 |
| EX.4 | α | 80 | 0.18 | 24 | Present | - | - | - | 150 |
| EX.5 | α | 80 | 0.18 | 24 | Present | - | - | - | Not measured |
| EX.6 | α | 80 | 0.18 | 24 | Absent | 140 | 266 | 3 | 3,500 |
| EX.7 | β | 80 | 0.18 | 24 | Present | 140 | 266 | 3 | 4,000 |
| EX.8 | α | 80 | 0.18 | 24 | Present | 140 | 266 | 3 | 3,400 |
| EX.9 | γ | 80 | 0.0 | 6 | Present | 140 | 266 | 3 | 3,300 |

In Examples 1 to 4 in which step (b2) was not carried out, the fluorine concentration of the finally-obtained formed TiO₂-SiO₂ glass body did not reach 3,000 ppm. In particular, although Example 4 included step (b1-α) in the same manner as in Example 3, it could be seen that the fluorine concentration thereof became considerably lower, at 150 ppm. The reason for the greatly decreased fluorine concentration was considered that, when the fluorine-containing porous TiO₂-SiO₂ glass body was moved from the reaction vessel, unreacted elemental fluorine (F₂) adsorbed on the fluorine-containing porous TiO₂-SiO₂ glass body reacted with moisture in the air to generate HF, and the HF reacted with the stable Si-O-Si network of the fluorine-containing porous TiO₂-SiO₂ glass body to generate Si-OH, and therefore proton sources in the porous TiO₂-SiO₂ glass body increase.

There, in Example 5, the concentration of elemental fluorine (F₂) of the fluorine-containing porous TiO₂-SiO₂ glass body immediately after step (b1-α) was measured. As a result, it was confirmed that elemental fluorine (F₂) higher than a measurement upper limit of 15 ppm was discharged and unreacted elemental fluorine (F₂) was adsorbed on the fluorine-containing porous TiO₂-SiO₂ glass body.

Meanwhile, in Examples 6 to 9 in which step (b2) was carried out, the fluorine concentration of the finally-obtained formed TiO₂-SiO₂ glass body exceeded 3,000 ppm. Further, the productions were carried out by repeating the operations under the same conditions. It was confirmed that the fluorine concentration of each productions was higher than 3,000 ppm, which indicates the effect of step (b2).

Further, in Examples 6 to 9, the concentration of elemental fluorine (F₂) of the fluorine-containing porous TiO₂-SiO₂ glass body immediatedly after step (b2) was measured in the same manner as in Example 5. The concentration was 0 ppm (measurement lower limit is 0.02 ppm) and discharge of elemental fluorine (F₂) was not observed.

Further, comparing Example 7 with Example 8, it was confirmed that a higher fluorine concentration could be achieved when intermittent supply elemental fluorine (F₂) and discharge in step (b1-β) were carried out as compared to when the treatment in an airtight system of step (b1-α) was carried out. The reason is that HF, which was not adsorbed on sodium fluoride, was discharged to the outside of the reaction vessel through intermittent supply of elemental fluorine (F₂) and discharge.

Further, comparing Example 8 with Example 9, it was confirmed that the fluorine concentration substantially comparable to the case of carring out the treatment in an airtight system in step (b1-α) can be achieved by continuously supplying of elemental fluorine (F₂) and discharging in step (b1-γ). As a result, the maintenance period t_{b1} is capable of shortening through continuous supply of elemental fluorine (F₂) and discharge in step (b1-γ).

### (Example 10)

### (Step (a))

TiO₂-SiO₂ glass fine particles obtained by gasifying TiCl₄ and SiCl₄ each serving as a glass-forming material of TiO₂-SiO₂ glass, respectively, then mixing these, and subjected to heat hydrolysis (flame hydrolysis) in an oxyhydrogen flame were deposited and grown onto a substrate, to thereby form a porous TiO₂-SiO₂ glass body.

### (Step (a'))

Since it is difficult to handle the porous TiO₂-SiO₂ glass body thus obtained without any treatment, the porous TiO₂-SiO₂ glass body was maintained in the air at 1,200°C for 4 hours in a state still deposited on the substrate, and the porous TiO₂-SiO₂ glass body was separated from the substrate to obtain a porous TiO₂-SiO₂ glass body having a diameter of about 200 mm, a length of about 300 mm and a bulk density of 0.45 g/cm³.

### (Step (b))

A 3.8 kg of the porous TiO₂-SiO₂ glass body was supported with an SUS316L-made jig and was then placed together with the jig in an SUS316L-made reaction vessel (volume: 50L). Then, a 300 g of pellet of sodium fluoride (manufactured by Stella Chemifa Corporation) was introduced into the reaction vessel so that the pellet did not come into contact with the porous TiO₂-SiO₂ glass body.

### (Step (b1-δ))

(1) The reaction vessel was heated from the outside thereof using a mantle heater to increase the internal temperature of the reaction vessel to 80°C from ambient temperature at a temperature increasing rate of 0.5 to 2°C/min.
(2) While the internal temperature of the reaction vessel was maintained at 80°C, vacuum deaeration was carried out until the internal pressure of the reaction vessel reached 13,000 Pa or lower in absolute pressure, and the reaction vessel was maintained for one hour.
(3) Into the reaction vessel was introduced a mixed gas of elemental fluorine (F₂) diluted to 20% by mole with nitrogen gas having a dew point of -60°C or lower until the internal pressure of the reaction vessel reached 0.05 MPa in gauge pressure, and the reaction vessel was maintained at a pressure P_{b1} of 0.05 MPa in gauge pressure and at a temperature T_{b1} of 80°C for 6 hours.
(4) The gas in the reaction vessel was purged to lower the internal pressure to the atmospheric pressure and then a mixed gass of elemental fluorine (F₂) diluted to 20 % by mole with nitrogen gas was flowed there through for 2 hours at a rate of 400 ml/min, to thereby renew elemental fluorine (F₂) in the reaction vessel.

Then, the operations (3) to (4) were further repeated three times so that a period t_{b1} during which the porous TiO₂-SiO₂ glass body was maintained under the condition of pressure P_{b1} was 24 hours in total, to thereby obtain a fluorine-containing porous TiO₂-SiO₂ glass body.

### (Step (b2))

The reaction vessel was heated untile the internal temperature thereof reached 140°C, vacuum deaeration was carried out until the internal pressure of the reaction vessel reached 13,000 Pa or lower in absolute pressure and the reaction vessel was maintained in such condition for 3 hours, to obtain a fluorine-containing porous TiO₂-SiO₂ glass body.

### (Step (c))

The fluorine-containing porous TiO₂-SiO₂ glass body after step (b2) was moved to a vitrification furnace. The porous TiO₂-SiO₂ glass body was heated to 1,360°C under reduced pressure in the vitrification furnace, maintained for 3 hours, and then heated to a transparent vitrification temperature (1,450°C) under a 100% helium gas atmosphere, and maintained for 4 hours, to thereby obtain a fluorine-containing transparent TiO₂-SiO₂ glass body.

### (Step (d))

The fluorine-containing transparent TiO₂-SiO₂ glass body was moved to a carbon furnace and heated to a softening temperature or higher (1,700°C) under an argon gas atmosphere and formed to a circumferential shape, thereby obtaining a fluorine-containing formed TiO₂-SiO₂ glass body.

### (Fluorine concentration variation width ΔF)

The cylindrical formed TiO₂-SiO₂ glass body having a diameter of 140 mm was cut into cylindrical glass body having a diameter of 85 mm and a thickness of 50 mm by grinding the outer peripheral portion thereof, and the cylindrical glass body was sliced into six glass pieces each having a thickness of 12 mm by the above-mentioned manner. To these six glass pieces, seven points of fluorine concentrations in total including six points of fluorine concentrations on the surface at the same side to the plane A of the respective glass pieces and one point of fluorine concentration on the surface of the plane B were obtained by fluorescence X-ray utilizing samples having known fluorine concentrations with an FP method (fundamental parameter method). A fluorine concentration variation width (ΔF) in the whole formed TiO₂-SiO₂ glass body was obtained from the maximum and minimum values of the seven points of fluorine concentrations. The average fluorine concentration was 6,600 ppm, the maximum value was 7,100 ppm, the minimum value was 6,200 ppm, and a fluorine concentration variation width ΔF was ±7% of the average fluorine concentration.

Further, a fluorine concentration variation width (ΔF) was obtained from five points of fluorine concentrations, among the measurement results in the seven points except for the plane A and plane B. The average fluorine concentration was 6,900 ppm, the maximum value was 7,100 ppm, the minimum value was 6,800 ppm, and a fluorine concentration variation width ΔF was ±2% of the average fluorine concentration. Thus, it was confirmed that a formed TiO₂-SiO₂ glass having extremely small deviation in fluorine concentration can be produced.

It is considered that the formed TiO₂-SiO₂ glass body having an extremely small deviation in fluorine concentration could be obtained is due to the fact that the elimination of fluorine is sufficiently prevented so that the elimination of fluorine can be equivalent between the outer peripheral portion and the inside of the porous TiO₂₋SiO₂ glass body, and it is also considered that the extremely small deviation in fluorine concentration could be achieved is due to a multiple contribution of (1) the effect of HF adsorbing ability of the added sodium fluoride, (2) the effect of intermittent supply of elemental fluorine (F₂) and discharge, and (3) the effect of removal of the unreacted elemental fluorine (F₂) adsorbed on the fluorine-containing porous TiO₂-SiO₂ glass in step (b2).

### (Example 11)

### (Step (d'))

The formed TiO₂-SiO₂ glass body having a circumferential shape and a diameter of 140 mm obtained in step (d) in Example 10 was placed in a carbon furnace and maintained at 1,700°C under an argon gas atmosphere for 4 hours to carry out reforming, thereby obtaining a block-type formed TiO₂-SiO₂ glass body.

### (Step (e))

The block-type formed TiO₂-SiO₂ glass body was cooled to 1,000°C in the furnace at a rate of 10°C/hr, and then maintained at 1,000°C for 3 hours. Then, the block-type formed TiO₂-SiO₂ glass body was further cooled to 950°C at a rate of 10°C/hr, and then maintained at 950°C for 72 hours. Subsequently, the block-type formed TiO₂-SiO₂ glass body was cooled to 900°C at a rate of 5°C/hr, and then maintained at 900°C for 72 hours. Then, the block-type formed TiO₂-SiO₂ glass body was cooled to ambient temperature to thereby obtain a formed TiO₂-SiO₂ glass body.

### (Fictive temperature variation width ΔTf)

Glass pieces were collected from two sites in the central portion of the formed TiO₂-SiO₂ glass thus obtained, two sits in the outer peripheral portion thereof, and two sites in the intermediate portion thereof, respectively, and were subjected to mirror polishing. The fictive temperatures of the polished glass pieces were measured by the method mentioned above. As a result, the average fictive temperature at two sites of the central portion was 896°C, the average fictive temperature at two sites of the inter mediate portion was 899°C, and the average fictive temperature at two sites of the outer peripheral portion was 901 °C. Thus, it was confirmed that a formed TiO₂-SiO₂ glass body having a fictive temperature variation width ΔTf was 5°C can be produced.

The synthetic quartz glass prepared by the production method of the present invention is suitable as an optical device or an optical member in which ultraviolet rays are handled or as an optical device or an optical member in which an index of reflection is controlled. Further, TiO₂-SiO₂ glass prepared by the production method of the present invention is suitable as an optical member requiring a super-low thermal expansion property, in particular, as an optical member of an exposure device for EUV lithography.

## Claims

1. A method for production of a synthetic quartz glass having a fluorine concentration of 3,000 ppm by mass or higher, comprising the following steps (a) to (c):
(a) depositing and growing quartz glass fine particles obtained by flame hydrolysis of a glass-forming material onto a substrate, to thereby form a porous glass body;
(b) maintaining the porous glass body in a reaction vessel under an elemental fluorine (F₂)-containing atmosphere of a pressure of P_{b1} and a temperature of 400°C or lower, and followed by maintaining in the reaction vessel under condition of a pressure P_{b2} lower than the pressure P_{b1} and a temperature of 400°C or lower, to thereby obtain a fluorine-containing porous glass body;
(c) heating the fluorine-containing porous glass body in a vitrification furnace to a transparent vitrification temperature, to thereby obtain a fluorine-containing transparent glass body;
wherein the pressure P_{b2} in step (b) is lower than the atmospheric pressure; and
wherein a temperature T_{b2} at which the glass body is maintained under the condition of the pressure P_{b2} in step (b) is equal to or higher than a temperature T_{b1} at which the glass body is maintained under the condition of the pressure P_{b1}.

2. A method for production of a TiO₂-containing synthetic quartz glass (TiO₂-SiO₂ glass) having a fluorine concentration of 3,000 ppm by mass or higher, comprising the following steps (a) to (c):
(a) depositing and growing TiO₂-SiO₂ glass fine particles obtained by flame hydrolysis of a glass-forming material onto a substrate, to therby form a porous TiO₂-SiO₂ glass body;
(b) maintaining the porous TiO₂-SiO₂ glass body in a reaction vessel under an elemental fluorine (F₂)-containing atmosphere of a pressure of P_{b1} and a temperature of 400°C or lower, and followed by maintaining in the reaction vessel under condition of a pressure P_{b2} lower than the pressure P_{b1} and a temperature of 400°C or lower, to thereby obtain a fluorine-containing porous TiO₂-SiO₂ glass body;
(c) heating the fluorine-containing porous TiO₂-SiO₂ glass body in a vitrification furnace to a transparent vitrification temperature, to thereby obtain a fluorine-containing transparent TiO₂-SiO₂ glass body;
wherein the pressure P_{b2} in step (b) is lower than the atmospheric pressure; and
wherein a temperature T_{b2} at which the glass body is maintained under the condition of the pressure P_{b2} in step (b) is equal to or higher than a temperature T_{b1} at which the glass body is maintained under the condition of the pressure P_{b1}.

3. The method according to claim 1 or 2, wherein a period t_{b2} during which the glass body is maintained under the condition of the pressure P_{b2} in step (b) is from 30 minutes to 1 day.

4. The method according to any one of claims 1 to 3, wherein a solid metal fluoride is allowed to be present in the reaction vessel in step (b).

5. The method according to any one of claims 1 to 4, wherein, in step (b), elemental fluorine (F₂) is continuously or intermittently supplied to the reaction vessel and the gas in the reaction vessel is continuously or intermittently discharged from the reaction vessel.

6. The method according to any one of claims 1 to 5, wherein the fluorine-containing porous glass body comes into contact with the atmosphere when the fluorine-containing porous glass body moves from the reaction vessel to the vitrification furnace.

## Patentansprüche

1. Verfahren zur Herstellung eines synthetischen Quarzglases mit einer Fluorkonzentration von 3.000 ppm pro Masse oder höher, umfassend die nachstehenden Schritte (a) bis (c):
(a) Abscheiden und Wachsen von Quarzglasfeinteilchen, erhalten durch Flammenhydrolyse eines glasbildenden Materials, auf ein Substrat, um dadurch einen porösen Glaskörper zu bilden;
(b) Halten des porösen Glaskörpers in einem Reaktionsbehälter unter einer elementaren fluor-(F₂)-haltigen Atmosphäre eines Drucks von P_{b1} und einer Temperatur von 400 °C oder niedriger und gefolgt von Halten in dem Reaktionsbehälter unter einer Bedingung eines Drucks P_{b2}, der niedriger als der Druck P_{b1} ist, und einer Temperatur von 400 °C oder niedriger, um dadurch einen fluorhaltigen porösen Glaskörper zu erhalten;
(c) Erwärmen des fluorhaltigen porösen Glaskörpers in einem Verglasungsofen auf eine transparente Verglasungstemperatur, um dadurch einen fluorhaltigen transparenten Glaskörper zu erhalten;
wobei der Druck P_{b2} in Schritt (b) niedriger als der Atmosphärendruck ist; und
wobei eine Temperatur T_{b2}, bei welcher der Glaskörper unter der Bedingung des Drucks P_{b2} in Schritt (b) gehalten wird, gleich oder höher als eine Temperatur T_{b1} ist, bei welcher der Glaskörper unter der Bedingung des Drucks P_{b1} gehalten wird.

2. Verfahren zur Herstellung eines TiO₂-haltigen synthetischen Quarzglases (TiO₂-SiO₂-Glas) mit einer Fluorkonzentration von 3.000 ppm pro Masse oder höher, umfassend die nachstehenden Schritte (a) bis (c):
(a) Abscheiden und Wachsen von TiO₂-SiO₂-Glasfeinteilchen, erhalten durch Flammenhydrolyse eines glasbildenden Materials, auf ein Substrat, um dadurch einen porösen TiO₂-SiO₂-Glaskörper zu bilden;
(b) Halten des porösen TiO₂-SiO₂-Glaskörpers in einem Reaktionsbehälter unter einer elementaren fluor-(F₂)-haltigen Atmosphäre eines Drucks von P_{b1} und einer Temperatur von 400 °C oder niedriger und gefolgt von Halten in dem Reaktionsbehälter unter einer Bedingung eines Drucks P_{b2}, der niedriger als der Druck P_{b1} ist, und einer Temperatur von 400 °C oder niedriger, um dadurch einen fluorhaltigen porösen TiO₂-SiO₂-Glaskörper zu erhalten;
(c) Erwärmen des fluorhaltigen porösen TiO₂-SiO₂-Glaskörpers in einem Verglasungsofen auf eine transparente Verglasungstemperatur, um dadurch einen fluorhaltigen transparenten TiO₂-SiO₂-Glaskörper zu erhalten;
wobei der Druck P_{b2} in Schritt (b) niedriger als der Atmosphärendruck ist; und
wobei eine Temperatur T_{b2}, bei welcher der Glaskörper unter der Bedingung des Drucks P_{b2} in Schritt (b) gehalten wird, gleich oder höher als eine Temperatur T_{b1} ist, bei welcher der Glaskörper unter der Bedingung des Drucks P_{b1} gehalten wird.

3. Verfahren nach Anspruch 1 oder 2, wobei ein Zeitraum t_{b2}, während dessen der Glaskörper unter der Bedingung des Drucks P_{b2} in Schritt (b) gehalten wird, von 30 Minuten bis 1 Tag beträgt.

4. Verfahren nach einem der Ansprüche 1 bis 3, wobei ein festes Metallfluorid in dem Reaktionsbehälter in Schritt (b) gegenwärtig sein darf.

5. Verfahren nach einem der Ansprüche 1 bis 4, wobei in Schritt (b) elementares Fluor (F₂) kontinuierlich oder periodisch dem Reaktionsbehälter zugeführt wird und das Gas in dem Reaktionsbehälter kontinuierlich oder periodisch aus dem Reaktionsbehälter abgeführt wird.

6. Verfahren nach einem der Ansprüche 1 bis 5, wobei der fluorhaltige poröse Glaskörper mit der Atmosphäre in Kontakt kommt, wenn sich der fluorhaltige poröse Glaskörper von dem Reaktionsbehälter zu dem Verglasungsofen bewegt.

## Revendications

1. Procédé pour la production de verre quartzeux synthétique présentant une concentration de fluor de 3000 ppm en masse ou plus, comprenant les étapes (a) à (c) suivantes :
(a) déposition et croissance de fines particules de verre quartzeux obtenues par hydrolyse à la flamme d'un matériau formant du verre sur un substrat, de façon à former ainsi un corps en verre poreux ;
(b) maintien du corps en verre poreux dans une cuve réactionnelle dans une atmosphère contenant du fluor élémentaire (F₂) sous une pression P_{b1} et à une température de 400°C ou moins, suivi d'un maintien dans la cuve réactionnelle dans des conditions de pression P_{b2} inférieure à la pression P_{b1} et de température de 400°C ou moins, de sorte que soit ainsi obtenu un corps en verre poreux contenant du fluor ;
(c) chauffage du corps en verre poreux contenant du fluor dans un four de vitrification à la température de vitrification transparente, de sorte que soit ainsi obtenu un corps en verre transparent contenant du fluor ;
dans lequel la pression P_{b2} dans l'étape (b) est inférieure à la pression atmosphérique ; et
dans lequel la température T_{b2} à laquelle le corps en verre est maintenu dans les conditions de pression P_{b2} dans l'étape (b) est égale ou supérieure à la température T_{b1} à laquelle le corps en verre est maintenu dans les conditions de pression P_{b1}.

2. Procédé pour la production d'un verre quartzeux synthétique contenant du TiO₂ (verre de TiO₂-SiO₂) présentant une concentration de fluor de 3000 ppm en masse ou plus, comprenant les étapes (a) à (c) suivantes :
(a) déposition et croissance de fines particules de verre de TiO₂-SiO₂ obtenues par hydrolyse à la flamme d'un matériau formant du verre sur un substrat, de façon à former ainsi un corps en verre de TiO₂-SiO₂ poreux ;
(b) maintien du corps en verre de TiO₂-SiO₂ poreux dans une cuve réactionnelle dans une atmosphère contenant du fluor élémentaire (F₂) sous une pression P_{b1} et à une température de 400°C ou moins, suivi d'un maintien dans la cuve réactionnelle dans des conditions de pression P_{b2} inférieure à la pression P_{b1} et de température de 400°C ou moins, de sorte que soit ainsi obtenu un corps en verre de TiO₂-SiO₂ poreux contenant du fluor ;
(c) chauffage du corps en verre de TiO₂-SiO₂ poreux contenant du fluor dans un four de vitrification à la température de vitrification transparente, de sorte que soit ainsi obtenu un corps en verre de TiO₂-SiO₂ transparent contenant du fluor ;
dans lequel la pression P_{b2} dans l'étape (b) est inférieure à la pression atmosphérique ; et
dans lequel la température T_{b2} à laquelle le corps en verre est maintenu dans les conditions de pression P_{b2} dans l'étape (b) est égale ou supérieure à la température T_{b1} à laquelle le corps en verre est maintenu dans les conditions de pression P_{b1}.

3. Procédé selon la revendication 1 ou 2, dans lequel la période t_{b2} durant laquelle le corps en verre est maintenu dans les conditions de pression P_{b2} dans l'étape (b) va de 30 minutes à 1 jour.

4. Procédé selon l'une quelconque des revendications 1 à 3, dans lequel un fluorure métallique solide peut être présent dans la cuve réactionnelle dans l'étape (b).

5. Procédé selon l'une quelconque des revendications 1 à 4, dans lequel, dans l'étape (b), du fluor élémentaire (F₂) est fourni en continu ou par intermittence à la cuve réactionnelle et le gaz dans la cuve réactionnelle est évacué de la cuve réactionnelle en continu ou par intermittence.

6. Procédé selon l'une quelconque des revendications 1 à 5, dans lequel le corps en verre poreux contenant du fluor vient au contact de l'atmosphère quand le corps en verre poreux contenant du fluor passe de la cuve réactionnelle au four de vitrification.
